# EUROPÄISCHE PATENTANMELDUNG

(11) **EP 2 272 801 A2**
(43) Veröffentlichungstag der Anmeldung: **12.01.2011**
(21) Anmeldenummer: 10005896.5
(22) Anmeldetag: 08.06.2010
(51) Int. Cl.: C02F 1/42, C02F 1/00, C02F 5/08

(54) **Wasserfilter mit Härtereduzierer und Resthärtestabilisator**

(30) Priorität: 25.06.2009 DE 102009030669
(71) Anmelder: Aquis Wasser-Luft-Systeme GmbH Lindau, Zweigniederlassung Rebstein, 9445 Rebstein (CH)
(72) Erfinder: Scholz, Roland, 9436 Balgach (CH); Heltele, Bernd, Dr., 9437 Marbach (CH)
(74) Vertreter: Roth, Klaus

(57) **Zusammenfassung**

Die vorliegende Erfindung betrifft einen Wasserfilter für wasserführende Geräte, insbesondere Haushaltsgeräte oder Geräte zur Aufbereitung von Speisen und/oder Getränken wie Getränkeautomaten, insbesondere Kaffeeautomaten, Trinkwasserspender, Koch- und Backgeräte, Dampfgeräte, insbesondere Dampfbügeleisen, Dampfreiniger, Hochdruckreiniger, Luftreiniger und -konditionierer oder dergleichen, mit einem mit Filtermaterial befüllten Gehäuse. Der Wasserfilter zeichnet sich erfindungsgemäß dadurch aus, dass als Filtermaterial eine Kombination aus einem Härtereduzierer und einem Resthärtestabilisator vorgesehen ist.

## Beschreibung

### Stand der Technik:

Zur Aufbereitung von Wasser, insbesondere in Trinkwasserleitungssystemen oder von daraus entnommenen und beispielsweise in Behältnissen zwischengelagerten Wasser ist eine Einflussnahme auf darin vorkommende Härtebildner bekannt. Handelsübliche Wasserfilter arbeiten entweder nach dem Prinzip der Abtrennung der Härtebildner, beispielsweise durch Ionenaustausch, oder durch Hemmung des Kristallwachstums, beispielsweise durch Zugabe von Inhibitoren, wie beispielsweise in der DE 10 2005 007 922 A1 beschrieben.

### Aufgabe und Vorteile der Erfindung:

Der vorliegenden Erfindung liegt die Aufgabe zugrunde, Wasserfilter entsprechend des einleitend dargelegten Standes der Technik zu verbessern.

Die Lösung der Aufgabe erfolgt ausgehend vom Oberbegriff des Anspruchs 1 durch dessen kennzeichnende Merkmale.

In den Unteransprüchen sind zweckmäßige und vorteilhafte Weiterbildungen angegeben.

Dementsprechend betrifft die vorliegende Erfindung einen Wasserfilter bzw. Wasserkonditionierer für wasserführende Geräte, insbesondere Haushaltsgeräte oder Geräte zur Herstellung und Aufbereitung von Speisen und/oder Getränken wie Getränkeautomaten, Schanksysteme, insbesondere Kaffeeautomaten, Trinkwasserspender, Eiswürfelbereiter, Koch- und Backgeräte, Dampfgeräte, insbesondere Dampfbügeleisen, Dampfbügelstationen, Dampfreiniger, Hochdruckreiniger, Luftreiniger, Luftbefeuchter und -konditionierer oder dergleichen, mit einem mit Wasseraufbereitungsmaterial befüllten Gehäuse. Dieser Wasserfilter zeichnet sich dadurch aus, dass als Wasseraufbereitungsmaterial eine Kombination aus einem Härtereduzierer und einem Resthärtestabilisator vorgesehen ist.

Durch diese Kombination der beiden mit unterschiedlicher Wirkungsweise arbeitenden Wasseraufbereitungsmedien zur Reduzierung bzw. Vermeidung von härtebedingten Ablagerungen an wasserführenden Geräten können sich einerseits beide Wasseraufbereitungsmedien in ihrer Wirkungsweise unterstützen und andererseits erfolgt hierdurch gleichzeitig eine Entlastung des jeweils anderen Mediums, so dass für beide eine längere Betriebslaufzeit bei im Wesentlichen gleich bleibendem Maschinenschutz möglich wird.

Besonders vorteilhaft wirkt sich dieses zusammenspiel der beiden Wasseraufbereitungsmedien bei nachträglicher Erhitzung des gefilterten Wassers auf hohe Temperaturen, z. B. > 80° C und/oder bei hohen Wasserhärten, z. B. von > 10° deutsche Wasserhärte (dH) aus. In einem solchen Anwendungsfall kann es beispielsweise ausreichen, wenn der Härtereduzierer das Rohwasser lediglich auf ca. 10° dH reduziert, an Stelle etwa üblicher Reduzierungen auf z. B. 4° bis 6° dH, und der Resthärtestabilisator, der ab diesem Härtebereich effektiv wirken kann stabilisierend auf die Resthärte wirkt und somit eine Kalkausfällung zumindest stark vermindert.

In einer ersten Ausführung kann der Härtereduzierer beispielsweise als Ionentauscher-Filtermaterial ausgebildet sein, beispielsweise in der Form eines Ionentauscherharzes . In einer besonders bevorzugten Ausführungsform ist das Ionentauscher-Filtermaterial wasserstoffgebunden, so dass es beim Ionentausch durch die Abgabe von Wasserstoffionen das aufzubereitende Rohwasser ansäuert und damit als pH-Wert-Verschieber wirksam werden kann. Diese ansäuerungsbedingte pH-Wertänderung verschiebt wiederum das Löslichkeitsgleichgewicht zumindest für Calciumcarbonat, so dass das als Säuerungsmittel wirksame, wasserstoffgebundene Ionentauscher-Filtermaterial die Kalkausfällung zusätzlich reduziert. Die Ansäuerung durch das wassserstoffgebundene Ionenaustauschermaterial wirkt somit als weiterer Resthärtestabilisator.

Auch bei der Herstellung von Eis in Kühlschränken, Eisbereitern, Eiswürfelmaschinen wird die Herstellung stabiler und klarer Eiswürfel durch die Härtereduktion des Wassers, insbesondere durch einen nicht gegen Natrium, sondern gegen Wasserstoff- austauschenden Ionenaustauscher oder durch Einsatz physikalischer Mineralreduktionsverfahren, erreicht. Besonders vorteilhaft wirkt sich die Härtereduktion im Zusammenspiel mit der Härtestabilisierung beim Schutz der eisbereitenden Maschinen vor Kalkablagerungen und einer daraus resultierenden verbesserten Energieeffizienz aus. Für die Herstellung klarer und stabiler Eiswürfel kann es beispielsweise ausreichen, wenn der Härtereduzier das Rohwasser lediglich auf ca. 10° dH reduziert, an Stelle etwa üblicher Reduzierungen auf z. B. 0° bis 4° dH, und der Resthärtestabilisator, der ab diesem Härtebereich effektiv wirken kann, wirkt stabilisierend auf die Resthärte und vermindert somit zumindest stark eine Kalkausfällung.

Zumindest der erstgenannte, erfindungsgemäß primäre Resthärtestabilisator kann vorteilhafterweise als ein Maskierungsmittel für Schwermetall-Ionen, wie z. B. Eisen und Mangan-Ionen wirksam sein und so eine Verminderung und/oder Verhinderung von Korrosion bewirken und/oder gegebenenfalls auch bereits vorhandene Ablagerungen wieder lösen.

Bei Verwendung einer Phosphatverbindung als Resthärtestabilisator, insbesondere einer Polyphosphatverbindung kann vorteilhafterweise eine Calcium-Eisen-Phosphat-Schutzschicht zur Verminderung bzw. Verhinderung von Korrosion gebildet werden. In weiter vorteilhafter Weise kann damit auch das andernfalls korrisionsbedingte Entstehen von braunem Wasser verhindert werden.

Insbesondere beim Einsatz von Maschinenbauteilen bestehend aus Materialien aus Buntmetall oder Buntmetalllegierungen kann die Bildung einer Schutzschicht zur Verminderung bzw. Verhinderung von Korrosion besonders vorteilhaft wirken.

In einer weiter vorteilhaften Ausführungsform kann eine Verschnittvorrichtung für das gefilterte Wasser vorgesehen sein, in der ein nicht enthärtetes Wasser dem enthärteten oder teilenthärtetem Wasser zugemischt wird. Hierdurch kann einerseits in weiter vorteilhafter Weise über einen längeren Betriebszeitraum ein für die jeweilige Anwendung optimaler Filterwirkungs- bzw. Härtebereich im Filtrat eingestellt werden und gleichzeitig ein Schutz der nachgeschalteten Geräte vor Verkalkung erreicht werden. Andererseits können damit auch Abweichungen von diesem optimalen Filterwirkungsbereich zu Beginn und gegen Ende der Filterbetriebslaufzeit ausgeglichen werden.

In einer besonders bevorzugten Ausführungsform kann hierzu die Verschnittvorrichtung einstellbar ausgebildet sein. Damit kann beispielsweise eine starke Beimischung von nicht enthärtetem oder anderweitig aufbereitetem Rohwassern in der ersten Betriebszeit realisiert werden, in welcher der Filter eine anfänglich starke Wirkung entfaltet. Wenn dieser sich auf seine betriebsmäßige Wirkung eingependelt hat, kann dann mit einer vergleichsweise geringeren Beimengung von nicht enthärtetem oder anderweitig aufbereitetem Rohwasser zu dem vom Wasserfilter enthärtetem oder teilenthärtetem Wasser dieser Änderung der Filterwirkung Rechnung getragen werden. Der zum Ende der Betriebszeit des Wasserfilters abnehmenden Filterwirkung kann in entsprechender Weise mit einer weiter verringerten, bis gegebenenfalls völlig unterbrochenen Beimengung von nicht oder anderweitig aufbereitetem Rohwasser zu dem vom Wasserfilter aufbereiteten Rohwasser Rechnung getragen werden.

Insgesamt kann somit durch eine Verschnittvorrichtung, die beispielsweise einen Bypass zur Vorbeileitung des nicht enthärteten Rohwassers oder eines anderweitig aufbereiteten Wassers, an der Enthärtungs- bzw. Teilenthärtungsstufe des Wasserfilters mit einem dessen wirksamen Querschnitt beeinflussenden Mittel aufweist, eine deutliche Erhöhung der Liter-Kapazität gegenüber einem vergleichsweise ohne einen solchen Bypass oder eine entsprechende verschnittvorrichtung ausgestatteten Wasserfilters bewirkt werden.

Dabei ist es besonders vorteilhaft, wenn das verschnittbeeinflussende Mittel im Abhängigkeit vom Erschöpfungsgrad des eingesetzten Ionenaustauschers den wirksamen Querschnitt für das Bypass und /oder Filtratwasser einstellt bzw. anpasst.

Weiterhin kann auch durch die erfindungsgemäß vorgesehene Kombination eines Filtermaterials, bestehend aus einem Härtereduzierer und einem Resthärtestabilisator, eine entsprechende Erhöhung der Literkapazität eines Wasserfilters mit Bypass im Vergleich zu einem Wasserfilter mit lediglich einem Härtereduzierer oder einem Resthärtestabilisator bewirkt werden.

Insbesondere beim Einsatz von Maschinenbauteilen bestehend aus Materialien aus Buntmetall oder Buntmetalllegierungen kann durch den im Vergleich zu einem Wasserfilter mit lediglich einem Härtereduzierer oder einem Resthärtestabilisator möglichen höheren Verschnittanteil das Filtrat auf einem höheren pH- Wert gehalten werden und zusätzlich Korrosion vermindert oder verhindert werden.

In einer weiter bevorzugten Ausführungsform kann auch ein Aktivkohlefilter vorgesehen sein, mit dem beispielsweise eine Geschmacksverbesserung und/oder eine Herausfilterung von bedenklichen oder gefährlichen Stoffen aus dem zu filternden Rohwasser bewirkt werden kann.

Der konstruktive Aufbau eines derartigen Wasserfilters kann in einer möglichen Ausführungsform vorteilhafterweise so ausgebildet sein, dass dieser als in einen Wassertank einsetzbare Filterpatrone ausgebildet ist. Ein solcher Wassertank kann beispielsweise ein Wasservorratstank eines wasserführenden Gerätes, insbesondere eines Haushaltsgerätes sein.

Alternativ oder zusätzlich kann der Wasserfilter so ausgebildet sein, dass er als in einen leitungsgebundenen Filterkopf einsetzbare Filterkartusche ausgebildet ist. Als leitungsgebundener Filterkopf werden erfindungsgemäß alle Filteranschlussstücke verstanden, die an eine wasserführende Leitung, insbesondere an ein Haushaltswasser-Versorgungs-Leitungssystem angeschlossen bzw. in dieses integriert werden können.

### Ausführungsbeispiel:

Die vorliegende Erfindung wird unter Bezugnahme auf die beigefügten Figuren nachfolgend näher erläutert.

Es zeigen:
- Fig. 1: eine schematische, perspektivische Schnittdarstellung eines Wasserfilters mit Härtereduzierer und Resthärtestabilisator, beispielhaft an einem leitungsgebundenen Filterkopf und einer damit verbundenen Haushaltsmaschine angeschlossen;
- Fig. 2: ein gegenüber der Fig.1 abgewandeltes Ausführungsbeispiel.

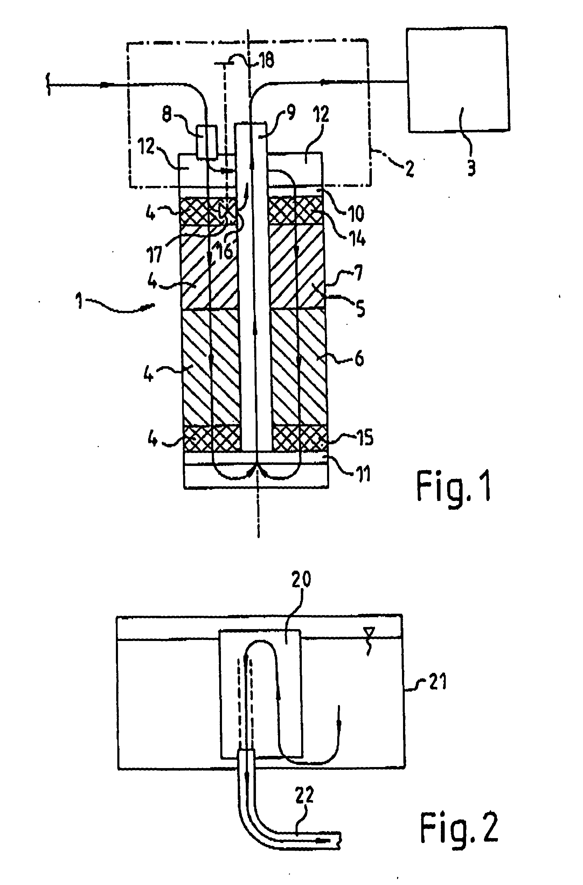

Dementsprechend zeigt die Fig. 1 beispielhaft und schematisch einen Wasserfilter 1, der an einen leitungsgebundenen Filterkopf 2 angeschlossen ist und über den ein wasserführendes Gerät 3 mit entsprechend aufbereitetem Wasser versorgt wird.

Das Filtermaterial 4 besteht aus einer Kombination aus einem Härtereduzierer 5, z. B. einem Ionentauscher in der Form eines Harzes, und einem Resthärtestabilisator 6, beispielsweise in der Form einer Phosphatverbindung, insbesondere bevorzugt in der Form einer Polyphosphatverbindung.

Damit das im Gehäuse 7 eingebrachte Filtermaterial nicht in den Zulauf 8 oder den Ablauf 9 austreten kann, können im Weiteren, in Fließrichtung betrachtet, Rückhaltemittel 10, 11 vorgesehen sein. Diese können beispielsweise als Sieb, als Vlies oder dergleichen ausgebildet sein.

Um ein günstiges Einströmverhalten zu bewirken, kann beispielsweise zusätzlich eine z. B. als ringförmige Kammer ausgebildete Einspülkammer 12 vorgesehen sein, durch die das durch den Zulauf 8 einfließende Wasser gleichmäßig filtereingangsseitig dem Filtermaterial beaufschlagt werden kann.

Sinngemäß entsprechend für den Filterauslass kann filterausgangsseitig eine Auslasskammer 13 vorgesehen werden.

Ein Aktivkohlefilter 14 kann filtereingangsseitig beispielsweise zur Geschmacksverbesserung und/oder zur Herausfilterung gegebenenfalls vorhandener, nicht erwünschter Wasserinhaltsstoffe vorgesehen sein. Ein weiterer Aktivkohlefilter kann beispielsweise filterausgangsseitig zur weiteren Verbesserung der Filterwirkung vorgesehen sein.

Eine Verschnittvorrichtung 16 zur Beimengung von nicht oder anderweitig aufbereiteten Rohwasser zu dem vom Filtermaterial 5, 6 aufbereiteten Rohwasser kann einerseits zur Erhöhung der Literkapazität des Wasserfilters 1 beitragen und andererseits eine Verlängerung der Betriebszeit, in welcher der Wasserfilter seinen optimalen Arbeitspunkt hat, also die von ihm gewünschte Filterwirkung erzielt.

Ein Einstellmittel 17, z. B. in der Form eines Ventils, einer im Querschnitt beeinflussbaren Öffnung oder dergleichen mehr, ermöglicht in vorteilhafter Weise eine Einstellung der Verschnittvorrichtung. Zur Bedienung dieses Einstellmittels kann ein Stellmoment 18 vorgesehen sein, beispielsweise in der Form eines Schiebers, einer Drehachse, gegebenenfalls mit gewindegeführter Verstellung oder dergleichen mehr.

Zur einfacheren Darstellung ist der in Fig. 1 dargestellte Wasserfilter in der Form einer an einen Filterkopf 2 anschließbaren Filterkartusche etwa zylindrisch um die Achse 19 ausgebildet dargestellt. Denkbar sind durchaus aber auch andere Konturen des Gehäuses und/oder der anderen Filterkomponenten, wie z. B. ovale oder polygone Querschnittsformen. Auch kugelförmig ausgebildete Filterkonturen sind durchaus möglich.

Die Fig. 2 zeigt eine gegenüber der Fig. 1 dahingehend abgewandelte Ausführungsform eines Wasserfilters 20, dass dieser in einem Tank 21 anschließbar ausgebildet und in diesem angeordnet ist.

Das Filterbett des Wasserfilters kann bei beiden Ausführungsformen sowohl als Aufstrom-, als auch als Abstrom- und/oder kombiniert als Aufstrom- und Abstrom-Filterbett ausgebildet sein. Der in der Fig. 2 beispielhaft dargestellte Ablauf 22 kann beispielsweise zu einem entsprechenden, wasserführenden Gerät führen, welches mit dem durch den Filter 20 gereinigten Wasser versorgt wird.

### Bezugszeichenliste:

- 1: Wasserfilter
- 2: Filterkopf
- 3: wasserführendes Gerät
- 4: Filtermaterial
- 5: Härtereduzierer
- 6: Resthärtestabilisator
- 7: Gehäuse
- 8: Zulauf
- 9: Ablauf
- 10: Rückhaltemittel
- 11: Rückhaltemittel
- 12: Einspülkammer
- 13: Auslasskammer
- 14: Aktivkohlefilter
- 15: Aktivkohlefilter
- 16: Verschnittvorrichtung
- 17: Einstellmittel
- 18: Stellelement
- 19: Achse
- 20: Wasserfilter
- 21: Tank
- 22: Ablauf

## Patentansprüche

1. Wasserfilter für wasserführende Geräte, insbesondere Haushaltsgeräte oder Geräte zur Herstellung und Aufbereitung von Speisen und/oder Getränken wie Getränkeautomaten, insbesondere Kaffeeautomaten, Trinkwasserspender, Eiswürfelbereiter, Kühlschränke, Koch- und Backgeräte, Dampfgeräte, insbesondere Dampfbügelsysteme, Dampfreiniger, Hochdruckreiniger, Luftreiniger, Luftbefeuchter und -konditionierer oder dergleichen, mit einem mit Wasserbehandlungsmaterial befüllten Gehäuse, **dadurch gekennzeichnet, dass** als Wasserbehandlungsmaterial eine Kombination aus einem Härtereduzierer und einem Resthärtestabilisator vorgesehen ist.

2. Nasserfilter nach Anspruch 1, **dadurch gekennzeichnet, dass** als Härtereduzierer ein Ionentauscher-Filtermaterial vorgesehen ist.

3. Wasserfilter nach Anspruch 1 oder 2, **dadurch gekennzeichnet, dass** ein überwiegend wasserstoffgebundenes Ionentauscher-Filtermaterial vorgesehen ist.

4. Wasserfilter nach einem der vorangehenden Ansprüche, **dadurch gekennzeichnet, dass** als Härtereduzierer ein schwach saurer Kationentauscher vorgesehen ist.

5. Wasserfilter nach einem der vorangehenden Ansprüche, **dadurch gekennzeichnet, dass** das lonentauscher-Filtermaterial ein pH-Wert-Verschieber ist.

6. Wasserfilter nach einem der vorangehenden Ansprüche, **dadurch gekennzeichnet, dass** das Ionentauscher-Filtermaterial ein Säuerungsmittel ist.

7. Wasserfilter nach einem der vorangehenden Ansprüche, **dadurch gekennzeichnet, dass** als Reathärtestabilisator ein Maskierungsmittel vorgesehen ist.

8. Wasserfilter nach einem der vorangehenden Ansprüche, **dadurch gekennzeichnet, dass** als Resthärtestabilisator eine Phosphatverbindung vorgesehen ist.

9. Wasserfilter nach einem der vorangehenden Ansprüche, **dadurch gekennzeichnet, dass** die Phosphatverbindung eine Polyphosphatverbindung ist.

10. Wasserfilter nach einem der vorangehenden Ansprüche, **dadurch gekennzeichnet, dass** das Ionentauscher-Filtermaterial ein zusätzlicher Resthärtestabilisator ist.

11. Wasserfilter nach einem der vorangehenden Ansprüche, **dadurch gekennzeichnet, dass** eine Verschnittvorrichtung für das zu filternde Wasser vorgesehen ist.

12. Wasserfilter nach einem der vorangehenden Ansprüche, **dadurch gekennzeichnet, dass** die Verschnittvorrichtung einstellbar ausgebildet ist.

13. Wasserfilter nach einem der vorangehenden Ansprüche, **dadurch gekennzeichnet, dass** eine Verschnittvorrichtung im Filter eingebaut ist, welche in Abhängigkeit vom Erschöpfungsgrad des Filtermaterials den Verschnitt ändert bzw. anpasst.

14. Wasserfilter nach einem der vorangehenden Ansprüche, **dadurch gekennzeichnet, dass** ein Aktivkohlefilter vorgesehen ist.

15. Wasserfilter nach einem der vorangehenden Ansprüche, **dadurch gekennzeichnet, dass** der Wasserfilter als in einen Tank einsetzbare Filterpatrone ausgebildet ist.

16. Wasserfilter nach einem der vorangehenden Ansprüche, **dadurch gekennzeichnet, dass** der Wasserfilter als in einen leitungsgebundenen Filterkopf einsetzbare Filterkartusche ausgebildet ist.

17. Wasserfilter nach einem der vorgenannten Ansprüche, **dadurch gekennzeichnet, dass** er in einem Tank eingesetzt wird, wobei ein Sauganschluss am Tank zum Ansaugen von Wasser aus dem Wassertank mit Mitteln zur Erzeugung eines Unterdrucks und ein Filteranschluss zum Anschluss des Wasserfilters im Inneren des Tanks vorgesehen ist.
